# EUROPEAN PATENT APPLICATION

(11) **EP 1 052 602 A2**
(43) Date of publication of application: **15.11.2000**
(21) Application number: 00303838.7
(22) Date of filing: 08.05.2000
(51) Int. Cl.: G07F 17/16, G07F 7/10, G06F 17/60

(54) **Electronic messaging system**

(30) Priority: 06.05.1999 GB 9910515; 06.05.1999 GB 9910509
(71) Applicant: NCR INTERNATIONAL INC., Dayton, Ohio 45479 (US)
(72) Inventor: Woods, Sarah, London SW1W 8QR (GB)
(74) Representative: Cleary, Fidelma

(57) **Abstract**

A public terminal incorporating an electronic messaging facility is provided. The terminal comprises memory means within the terminal for storing a message to be output at that terminal for a predetermined period of time, the stored message having been recorded at the terminal itself or having been received from a geographically remote location and message broadcasting means for outputting the stored message. The terminal also comprises message input means for recording a message to be output at the terminal itself or at a geographically remote location. A network of such terminals is also provided.

## Description

The present invention relates to electronic messaging systems and, in particular, to a public terminal incorporating an electronic messaging system.

Children meet each other at public places and often wish to leave messages for each other when the person they wish to see is not there. They also want to express their artistic flair and display it to their peers. However, all too often, this desire to express themselves manifests itself as graffiti on buildings and in public places.

Public messaging systems are known, for example at railway stations and football grounds but access to these is generally restricted and is not available to the general public. Electronic mail facilities are quite widely available but requires a user and recipient to have electronic mail addresses and access to a computer. Although mobile devices are now available with e-mail capabilities, these are expensive and too sophisticated for young children

The children of today are however very comfortable with technology, many being capable of interacting with a personal computer to play games and for educational purposes from quite a young age. However, these are usually based in the home or at school and in most instances use of public terminals such as an ATM is restricted. Because of these restrictions on use of technology, children aspire towards being able to use public terminals, such as ATMs, information kiosks and terminals in cyber cafes etc.

Banks and other financial institutions in particular, are keen to attract young customers as research has shown these customers are more likely to remain loyal to that bank during adult life. Banks are unwilling to provide ATM services to children until they reach a certain age and have developed some level of understanding of the concepts of financial transactions.

Therefore children with bank accounts have to use branch facilities that they often perceive as boring and dull and which are expensive for the bank. Ideally, therefore, the young customers need to be attracted to use the computerised channels of service provision rather than the human ones. Not only does this ensure that such customers are cheap to service while young but also instils these low-cost (to the institution) habits for life.

The present invention to provide a system that ameliorates these disadvantages and which appeals to children.

According to a first aspect of the present invention, there is provided a public terminal comprising memory means within the terminal for storing a message to be output at that terminal for a predetermined period of time, the stored message having been recorded at the terminal itself or having been received from a geographically remote location and message broadcasting means for outputting the stored message.

The recorded message is stored in memory and is output at the terminal or terminals at which it was recorded or which were specified at the time of recording the message. Hence, no user identification address such as an e-mail address is necessary or needs to be accessed in order to send or retrieve an electronic message.

The terminal preferably comprises message input means for recording a message to be output at the terminal itself or at a geographically remote location but may be a billboard type terminal without any message recording facilities. The message may be, for example, text, video, sound, hand-writing or a still photograph or any combination of these. A message can be recorded at home but preferably at a terminal and broadcast at that and/or other similar terminals. The message can be left to play to anybody in the neighbourhood of the terminal or they can be left for a specific addressee as will be described later.

Hence in one aspect, the invention can be thought of as a means of providing e-graffiti. The multi-media techniques employed assist in the reduction of real graffiti and consequent problems of removal and so on.

The message input means includes message output specification means for specifying the location or locations at which a recorded message is to be output. Hence if a user has friends in a particular locality or when the message is pertinent to a particular geographical location, this may be specified .

In a more sophisticated embodiment, the message input means may includes message recipient specification means for indicating a specific recipient or category of recipients for a message and wherein the terminal further includes recipient identification means for identifying a recipient before a stored message is output by the message output means. Hence, the message can be accessed only by the intended recipients rather than any member in the vicinity of the terminal so as to provide users with some privacy.

In a further more sophisticated embodiment, the public terminal may be provided with user identification means, the terminal being adapted to provide improved or additional functionality in response to identification of a user. Only when a user is authorised can he or she obtain a higher level functionality. The means of identifying users can be a simple code-number, a personal card with a Personal Identification Number (PIN), a smart card, i-button etc. The user can be identified in a generic sense, in other words a hierarchy of people entitled to use particular features can be created.

As a consequence of this two-tier operation, young users of the terminal who do not the have cards or other user identification means will become envious of those who do and will feel under pressure to obtain the relevant card. This provides an opportunity for a bank, or retail concern, for example, to issue cards or other user identification devices so as to place their branding before the young public. The card may also be adapted to provide other services to the user such as use of facilities at an automatic teller machine but this could be subject to a qualifying period during which the frequency and maturity of the card use could be monitored.

The terminal may be provided with payment receiving means for obtaining payment for the electronic messaging service or for additional functions or services available to certain users. This may be implemented when the message is desired to be broadcast extensively or at certain premium times or locations. Alternatively, operation of the terminals may be funded entirely by advertising that is shown by the terminal.

Preferably the terminal forms part of a network of terminals and the invention also provides such a network.

The invention also provides a game played using the terminals

In a preferred embodiment the terminal is adapted to be provided at public transport terminals and can be arranged to provide transport information, either in a general sense or in response to specific queries. Advertising may also be provided.

From another aspect, the present invention resides in an electronic messaging system comprising one or more public terminals connected via a communications network, message input means provided at a public terminal or at a location remote from the terminal for recording a message to be output, memory means located at the public terminal for storing a message to be output at that terminal for a predetermined period of time, the stored message having been recorded at the terminal itself or having been received from a geographically remote location and message broadcasting means for outputting the stored message.

Embodiments of the present invention will now be described, by way of example, with reference to the accompanying drawings, in which:
Figure 1 shows a public terminal embodying the present invention;
Figure 2 shows a user interacting with the terminal of Figure 1;
Figure 3 shows a message being replayed on the terminal of Figure 1;
Figure 4 shows some alternative input techniques for use with the terminal of Figure 1;
Figure 5 shows a terminal in accordance with another embodiment of the present invention installed in a bus shelter;
Figure 6 shows a block schematic diagram of the elements of a terminal embodying the present invention;
Figure 7 shows another embodiment of the present invention where the message is recorded at a portable computer remote from the terminal and is output at a billboard terminal;
Figure 8 shows a flow diagram illustrating the operation of the embodiment shown in Figure 7;
Figure 9 shows a game being played involving use of a network of terminals according to the present invention; and
Figure 10 shows another function of a network of terminals according to the present invention.

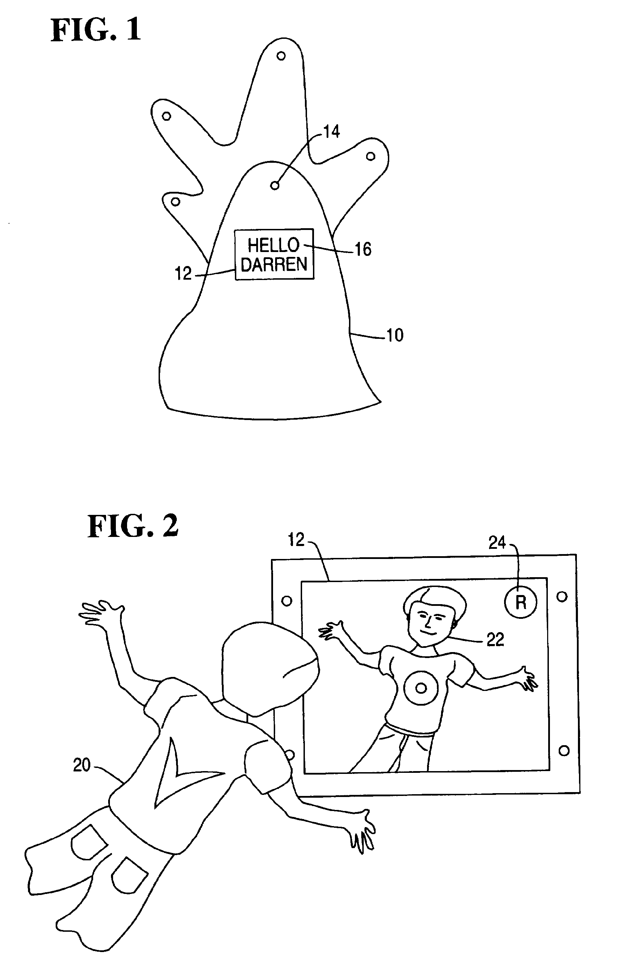

Figure 1 illustrates a first embodiment of the present invention comprising a terminal 10 having a touch-sensitive screen 12 and a camera 14. The terminal 10 is designed to provide a friendly appearance and not to be daunting to young potential users. In the drawing, a message 16 "**Hello, Darren**" is being shown on the screen 12. It should be understood that the terminal is equipped with the requisite technology and operating software, such messages could comprise text, hand-writing, video, sound and still photographs.

Messages may be left on the terminal 10 by any member of the public and will be displayed for a certain length of time (for example, one hour). Where a large number of messages have been left, these will be shown in rotation.

Figure 2 shows a user 20 of a terminal 10 recording a video message. Signals are input via a camera 14 (Figure 1) and the user can see his or her own image 22 on the screen 12. Should the user not be satisfied with his recording, he can press an icon 24 marked on the touch-sensitive screen to re-record the message. He or she can also add a text message to supplement the image if desired. Once the message has been recorded it will continue to be displayed on the terminal, either continuously or in sequence, subject to output of messages left by other people. Where the terminal is in high demand, the length of messages that can be recorded may be reduced.

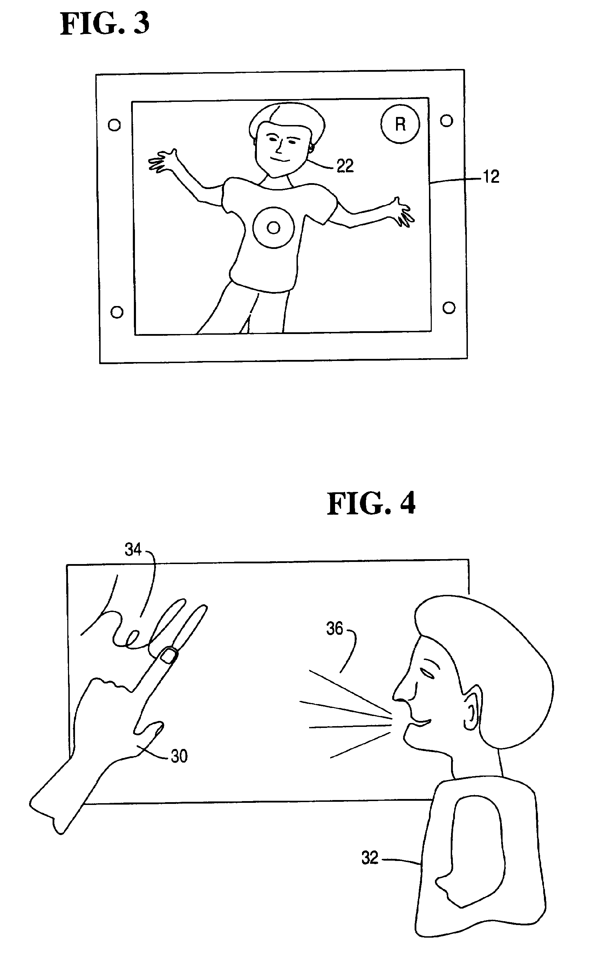

Figure 3 shows the video message (image) 22 recorded at Figure 2 being displayed on the screen 12. Other people visiting terminal 10 will thus see the image and any supplemental text message being displayed on the screen. Considerable artistic freedom may be provided by the terminal and this will allow people to express themselves without the damaging consequences of real graffiti

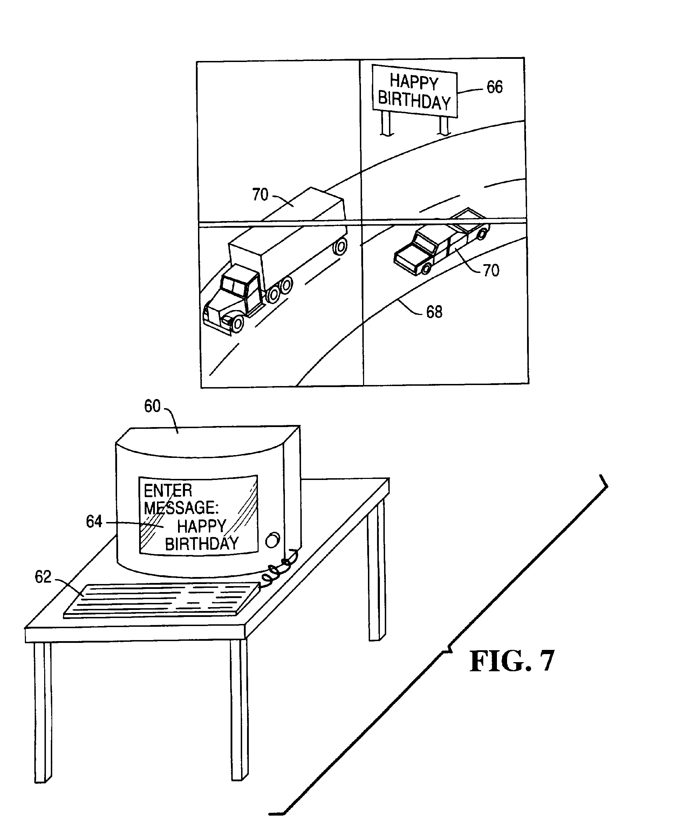

Figure 4 shows the hand 30 of a further user writing a hand-written message 34 on the touch-sensitive screen. The recording of this message may be subject to the provision of handwriting recognition technology at the terminal or it may be recorded as a graphics file to be displayed exactly as it was written. Another user 32 is recording a sound message 36 via a microphone 46(Figure 7).

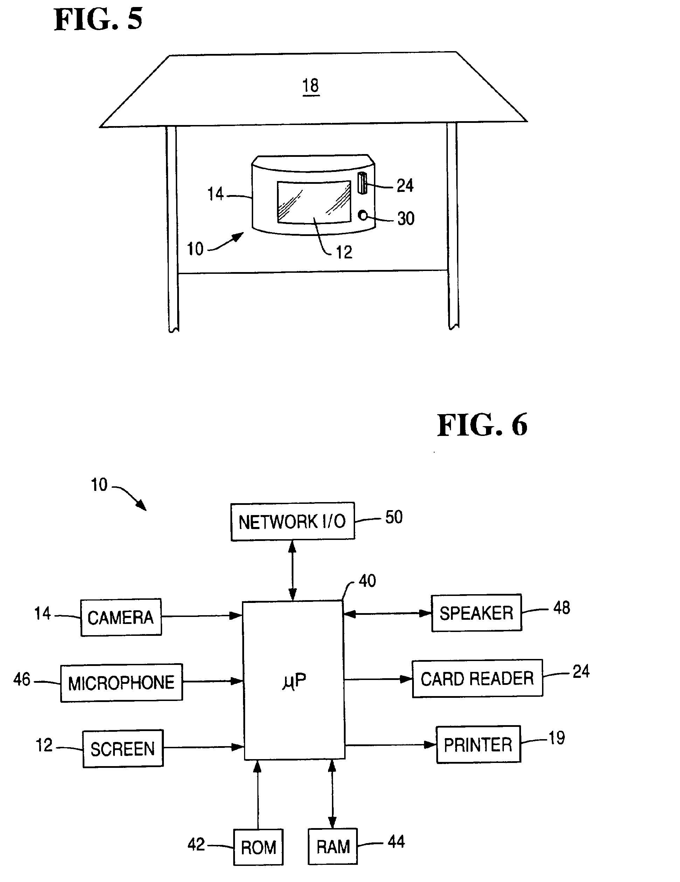

Figure 5 shows a terminal 10 according to the present invention installed in a bus shelter 18. As can be seen from the drawing, the screen 12 of the terminal displays a few lines of text information that may be a bus timetable when no messages are being output. Alternatively, at a particular time or when no messages are being displayed, advertisements may be displayed to people waiting for a bus.

The terminal is equipped with a camera 14 that records an image of the user. While this may happen automatically as the user 20 approaches the terminal, it is preferable that the camera 14 be activated by the user 20 by pressing the appropriate icon on the screen 12 so as to prevent other user's of the bus stop becoming irritated. The image 22 of the user 20 is displayed on the display screen 12 as is shown in Figure 3 and may be displayed for a certain length of time or periodically in a cycle of such images. After a certain length of time the image 22 is erased to allow other images to be recorded. Selection of the "R" icon in the top right-hand corner of the screen 12 allows the user 20 to re-record the image 22 until he is happy with it.

A block diagram representation of the terminal is shown in Figure 6 and comprises a microprocessor (pP) 40 connected to a network input/output (I/O) such as a modem 50, a camera 14, sound recording means 46, a touch sensitive screen 12, a read only memory (ROM) 42, a random access memory (RAM) 44, a printer 19, a loudspeaker 48 and a card reader 24.

The microprocessor 40 operates under instructions provided by the ROM 42 to store messages input via the touch screen 12, camera 14 and sound recording means 46 into a random access memory 44. Other storage techniques may be used as appropriate. The microprocessor 40 then retrieves the electronic messages for display on the screen 12 or via the loudspeaker 48 as appropriate. Messages left may be played in strict rotation, be played at diminishing frequency with the passage of time

The I/O may provide for operation as part of a network or it may allow the user to obtain information from the terminal to take away. The printer 19 can provide printed material for the user, be it his own messages, bus timetable information and so on.

By provision of the sound recording means 46 and the loudspeaker 48, sound information may be recorded at the terminal by a user with tape recording device. Alternatively, printed information or video information can be taken away whether for playing on the move or at a remote terminal, for example a domestic computer.

In operation as part of a network, messages may be transmitted to similar terminals at geographically remote locations, for example via the Internet. The microprocessor 40 is connected to both receive and transmit such messages via the Internet 50. On recording a message, the user may be given the option of specifying which remote terminals, if any, his message should be sent to.

Figure 7 shows an embodiment of the present invention where a user may access the system from a personal computer 60 having a keyboard 62 which is connected to the Internet (not shown). By, for example, visiting a Web site a user is given the option 64 to enter a message for remote display. The message may be displayed at one or more of the terminals of the type shown in Figures 1 to 6 or, at a somewhat larger billboard-style terminal 66 as is shown in Figure 7. The billboard terminal 66 is located adjacent a road 68 along which traffic 70 is progressing. Alternatively, such a billboard 66 could be located at other busy places, such as railway stations.

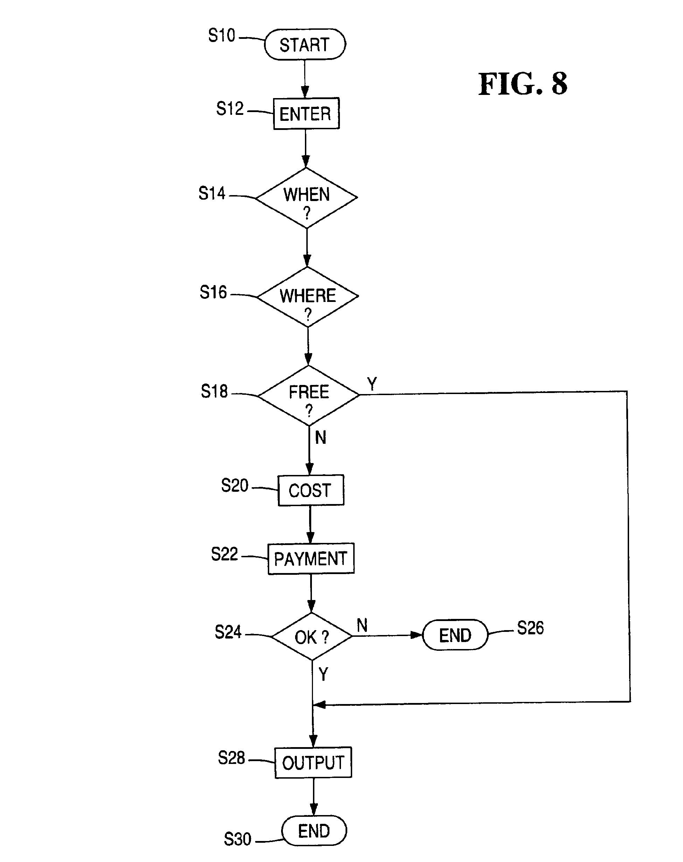

Figure 8 shows a flow diagram of operation of the system shown in Figure 7. After starting at step S10, the user is invited to enter a message at step S12. At step S14 and step S16 the user is invited to indicate when and where he would like the message to be displayed. On the basis of this information, the system determines whether there will be a charge associated with this display at step S18. Such a charge could be dependent upon the location of the terminal or terminals and the time of day. For example, a comparatively high price could be charged for display of a message at a busy railway station during commuter travel peak time. The cost could also vary according to the length of the message. If displaying of the message requires payment, processing proceeds to step S20 where the cost is indicated to the user and payment details, for example a credit card number and expiry date, may be entered at step S22. At step S24, the system determines whether the payment is acceptable and if not, processing ends at step S26. If payment has been successfully made, processing proceeds to step S28 and the message is transmitted to the terminals/locations at which it is to be output. Processing terminates at step S30.

In a further embodiment, the terminal is adapted to provide additional functionality to a specific category of users only, for example users possessing an appropriate card. The user inserts the card into the card reader 24 (Figures 5 and 6) and data stored on the card is checked before access to the additional functionality is given. The additional functionality may include a longer message facility, a directed message facility (to a specific recipient) or other functionality.

As a consequence of this two-tier operation, young users of the terminal who do not have cards will become envious of those who do and will feel under pressure to obtain the relevant card. This provides an opportunity for a bank, or retail concern, for example, to issue cards so as to place their branding before the young public. The card may also be adapted to provide other services to the user such as use of facilities at an automatic teller machine but this could be subject to a qualifying period during which the frequency and maturity of the card use could be monitored.

It should be appreciated that alternative techniques of identifying users could be used such as a password, a PIN alone, i-buttons (available from Dallas Semiconductor), a SMART card or other non-volatile read/write memory and so on. Where functionality has to be paid for, coins can be inserted into the coin slot 30 (Figure 5), money deducted from a credit card or directly from a bank account and so on.

Payment in such a way could allow access to a still further hierarchy of functions. Access to these functions can be authorised by way of frequency of terminal use, funds stored in a bank account, length of time for which a card is held and so on.

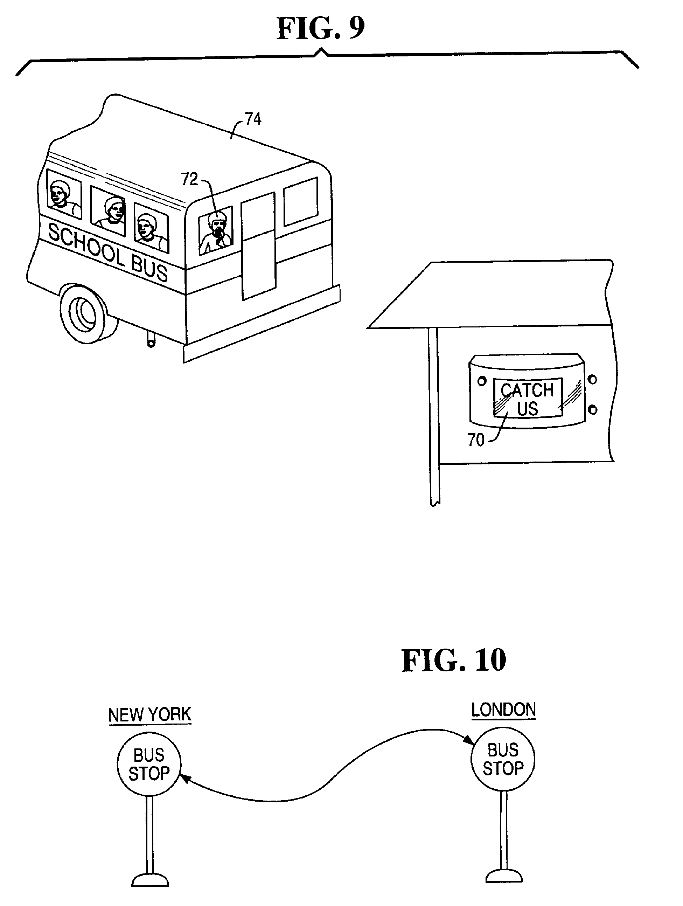

A network of the terminals can be used to play games, for example the game of tag shown in Figure 9. A message 70 is recorded and left looping on the terminal while a number of users 72 escape on a bus 74. The onus is then on subsequent users to catch those that left the message. The tiered functionality can be exploited in such a game because clues to the whereabouts of the users 42 could be left on the terminal so as to be accessible only to a particular user or class of users.

As indicated above, advertising may be shown on the terminal, for example when the terminal is not in use, at intervals while the terminal is in use or prior to allowing the user to perform a certain function.

Figure 10 shows that a network of terminals may be provide at transport terminals in different countries. The messages left at a bus stop in London, for example, could be sent to New York City. This level of functionality can be reserved for those users that have a predetermined minimum level of access.

## Claims

1. A public terminal comprising
memory means within the terminal for storing a message to be output at that terminal for a predetermined period of time, the stored message having been recorded at the terminal itself or having been received from a geographically remote location; and message broadcasting means for outputting the stored message.

2. A public terminal according to claim 1, further comprising message input means for recording a message to be output at the terminal itself or at a geographically remote location.

3. A public terminal according to claims 1 or 2 wherein the broadcast message has been recorded at a geographically remote interactive public terminal or at a remote personal computer or computing device.

4. A public terminal according to claim 2, wherein the message input means includes message output specification means for specifying the location or locations at which a recorded message is to be output.

5. A public terminal according to any of claims 2 to 4, wherein the message input means includes message recipient specification means for indicating a specific recipient or category of recipients for a message and wherein the terminal further includes recipient identification means for identifying a recipient before a stored message is output by the message output means.

6. A public terminal according to any preceding claim, wherein the message input means is adapted to record messages in any of text, video, sound, hand-writing or a still photograph format.

7. A public terminal according to any preceding claim, further comprising payment receiving means for obtaining payment for the electronic messaging service prior to the recording or the outputting of a message.

8. A public terminal according to any preceding claim, further comprising user identification means, the terminal being adapted to provide additional functionality in response to identification of a user.

9. A public terminal according to claim 8, wherein the user identification means is adapted to identifying a class of users.

10. A public terminal according to claim 9, wherein the user identification means comprises means for reading an i-button.

11. A terminal network comprising an interconnected plurality of public terminals as claimed in any one of the claims 1 to 10.

12. A game comprising a plurality of players, moving at least a proportion of the players between a plurality of terminals as claim 11 and leaving messages at the terminals.
